# EUROPEAN PATENT APPLICATION

(11) **EP 2 157 785 A1**
(43) Date of publication of application: **24.02.2010**
(21) Application number: 09164461.7
(22) Date of filing: 02.07.2009
(51) Int. Cl.: H04N 5/445, H04N 5/76

(54) **Broadcasting processing apparatus and control method thereof**

(30) Priority: 18.08.2008 KR 20080080497
(71) Applicant: Samsung Electronics Co., Ltd., Suwon-si, Gyeonggi-do 442-742 (KR)
(72) Inventor: Son, Hyo-jin, Suwon-si, Gyeonggi-do (KR)
(74) Representative: Robinson, Ian Michael

(57) **Abstract**

A broadcasting processing apparatus and method which performs a search or reservation with regard to a future broadcasting program that is not yet stored in electronic program guide (EPG) data. The broadcasting processing apparatus includes a signal processor which processes a broadcasting signal including EPG data; and a controller which searches the EPG data to determine whether data corresponding to a broadcasting program is currently included in the EPG data, and performs a set reservation function with respect to the broadcasting program if it is determined that the data corresponding to the broadcasting program is currently included in the EPG data, and if the controller determines that the data corresponding a broadcasting program is not currently included in the EPG data, the controller repeatedly searches the EPG data at periodic intervals to determine whether the data corresponding the broadcasting program is included in the EPG data which is updated.

## Description

### BACKGROUND OF THE INVENTION

### Field of the Invention

Apparatuses and methods consistent with the present invention relate to broadcasting processing, and more particularly, to performing a search or reservation with regard to a future broadcasting program that is not stored yet in electronic program guide (EPG) data.

### Description of the Related Art

In digital broadcasting, guide information about broadcasting programs, i.e., EPG data are provided as additional data through a broadcasting signal. A broadcasting processing apparatus, e.g., a digital television (DTV) receives the EPG data and displays an EPG menu based on the EPG data so that a user can obtain program information such as program titles and schedules according to channels through the EPG menu, select a desired channel or program, or execute a reservation function such as a reservation viewing, a reservation recording, or the like.

Such an EPG menu may be provided using only the EPG data which is received through a broadcasting signal and stored currently. As a result, a user can not execute a search function or a reservation function for a future broadcasting program whose data is not stored yet. For example, if a broadcasting program for which a user desires to execute a reservation recording is to be broadcast four days later and EPG data only includes data for broadcasting programs which will be broadcast within the next two days, a user should wait until EPG data including data regarding the desired broadcasting program is received and stored to execute a reservation recording for the broadcasting program. Accordingly, a user may miss the broadcasting program or has to repeatedly and continuously check whether the EPG data related to the desired broadcasting program is received and stored so as to execute a reservation recording.

Accordingly, it would be more preferable if a user may execute a search or a reservation recording with regard to a future broadcasting program whose EPG data are not stored yet.

### SUMMARY OF THE INVENTION

According to the present invention there is provided an apparatus and method as set forth in the appended claims. Other features of the invention will be apparent from the dependent claims, and the description which follows.

According to an aspect of the present invention, there is provided a broadcasting processing apparatus including: a signal processor which processes a broadcasting signal; and a controller which selects a broadcasting program to set a reservation function, and performs a set reservation function if data corresponding to the selected broadcasting program exist among EPG data included in a received broadcasting signal.

The controller may determine whether data corresponding to the selected broadcasting program exist among prestored EPG data.

The controller may perform the set reservation function if data corresponding to the selected broadcasting program exist among the prestored EPG data.

The controller may display a message to inform that data is generated corresponding to the selected broadcasting program if the data corresponding to the selected broadcasting program exist among the received EPG data.

The controller may periodically check whether data corresponding to the selected broadcasting program exist among the received EPG data.

The broadcasting processing apparatus may further include a user input unit which is provided to select a broadcasting program to set the reservation function.

The user input unit may receive conditions about the broadcasting program to select the broadcasting program.

The conditions may include a search formula combining a plurality of search words.

The user input unit may receive conditions about a search period of the EPG data.

The reservation function may include at least one of an EPG data display, a reservation viewing and a reservation recording for the selected broadcasting program.

According to another aspect of the present invention there is provided a control method of a broadcasting processing apparatus, the control method including: selecting a broadcasting program to set a reservation function; and performing a set reservation function if data corresponding to the selected broadcasting system exist among EPG data included in a received broadcasting signal.

The control method may further include determining whether data corresponding to the selected broadcasting program exist among prestored EPG data.

The control method may further include performing the set reservation function if data corresponding to the selected broadcasting program exist among the prestored EPG data.

The control method may further include displaying a message informing that data is generated corresponding to the stored broadcasting program if data corresponding to the selected broadcasting program exist among the received EPG data.

The control method may further include periodically determining whether data corresponding to the selected broadcasting program exist among the received EPG data.

The selecting the broadcasting program may include receiving conditions about the broadcasting program.

The conditions may include a search formula which combines a plurality of search words.

The selecting the broadcasting program may include receiving conditions about a search period of the EPG data.

The reservation function may include at least one of an EPG data display, a reservation viewing and a reservation recording about the selected broadcasting program.

### BRIEF DESCRIPTION OF THE DRAWINGS

The above and/or other features of the present invention will become more apparent and more readily appreciated from the following description of the exemplary embodiments, taken in conjunction with the accompanying drawings of which:
FIG. 1 is a block diagram of a broadcasting processing apparatus according to an exemplary embodiment of the present invention; and
FIG. 2 is a flowchart illustrating a method of setting a search function or a reservation function of the broadcasting processing apparatus according to an exemplary embodiment of the present invention.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

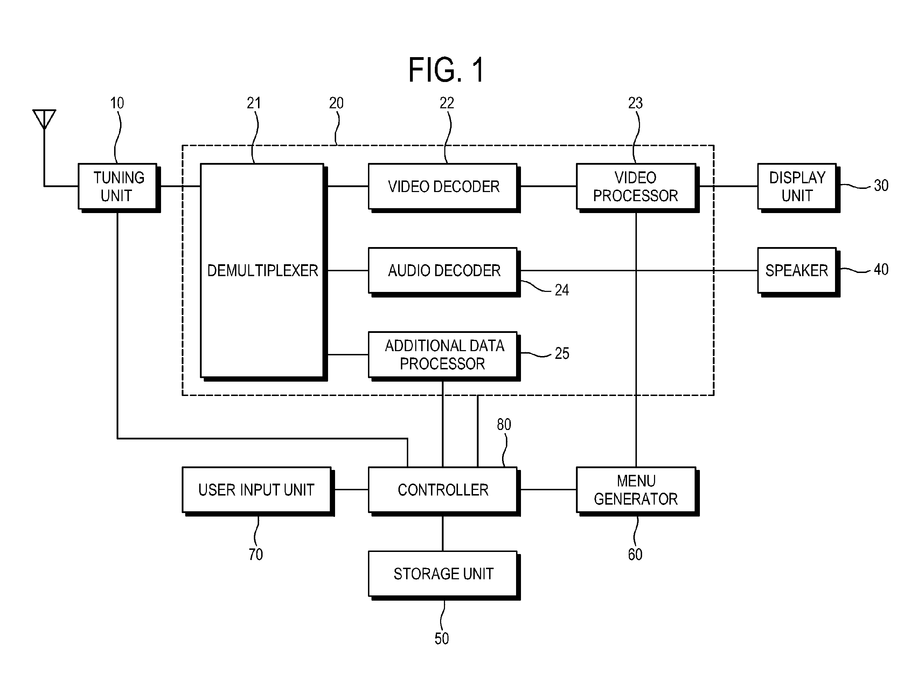

FIG. 1 is a block diagram of a broadcasting processing apparatus according to an exemplary embodiment of the present invention. The broadcasting processing apparatus, e.g., a DTV, processes and displays a broadcasting signal.

As shown therein, the broadcasting processing apparatus according to the exemplary embodiment of the present invention includes a tuning unit 10, a signal processor 20, a display unit 30, a speaker 40, a storage unit 50, a menu generator 60, a user input unit 70 and a controller 80.

The tuning unit 10 tunes to a frequency of a channel according to a control of the controller 80 (to be described later) and receives a broadcasting of the channel through an antenna. The tuning unit 10 includes a channel detection module (not shown) and an RF (radio frequency) demodulation module (not shown).

A broadcasting signal which is demodulated by the tuning unit 10 is processed by the signal processor 20 and output to the display unit 30 and the speaker 40. Here, the signal processor 20 may include a demultiplexer 21, a video decoder 22, a video processor 23, an audio decoder 24 and an additional data processor 25.

The demultiplexer 21 separates a demodulated broadcasting signal into a video signal, an audio signal and an additional data signal.

The video signal, the audio signal and the additional data signal are restored by the video decoder 22, the audio decoder 24 and the additional data processor 25, respectively. The video decoder 22, the audio decoder 24 and the additional data processor 25 restore the signals in a decoding format which corresponds to an encoding format of the broadcasting signal.

The additional data are transmitted according to the Program Specific Information (PSI) or the Program and System Information Protocol (PSIP) standard. The additional data include (EPG) data, which provides various information such as program titles, broadcasting times, viewing grades, broadcasting categories, etc. in a plurality of tables such as an system time table (STT), a virtual channel table (VCT), an event information table (EIT) and an extended text table (ETT). The EPG data which is decoded by the additional data processor 25 is stored in the storage unit 50.

The decoded video signal is scaled and processed by the video processor 23 to have a vertical ratio, a resolution and a picture ratio corresponding to an output standard of the display unit 30. The video processor 23 may include an image processing module (not shown) such as a scaler. The decoded audio signal is output through the speaker 40.

The display unit 30 includes a display panel (not shown) to display an image thereon and a panel driver (not shown) to control the display panel. The display unit 30 according to the exemplary embodiment of the present invention may include various display modules such as a digital light processing (DLP) projector, a liquid crystal display (LCD) and a plasma display panel (PDP).

The storage unit 50 stores therein EPG data received in a broadcasting signal. The storage unit 50 may include a memory device. If the EPG data are received, the controller 80 stores the EPG data in the storage unit 50. The controller 80 updates the stored EPG data whenever new version EPG data is received.

The menu generator 60 generates an EPG menu based on the EPG data stored in the storage unit 50 so that a user can view and comprehend the EPG data easily. Generally, the menu generator 60 includes an on screen display (OSD) integrated circuit (not shown) to generate an OSD menu. The EPG menu which is generated by the menu generator 60 is synthesized with a video signal of a current channel by the video processor 23 and output to the display unit 30.

The user input unit 70 is provided to select and input various functions of the broadcasting processing apparatus as well as to tune channels and to select and control an EPG menu. The user input unit 70 includes a key or a button (not shown) which are manipulatable by a user and a key signal generator (not shown) to generate a key signal corresponding to manipulation of the key or the button. The user input unit 70 may include a remote controller, a mouse, a keyboard, a keypad or a touch panel. The user input unit 70 may be provided in a lateral side of a main body casing of the broadcasting processing device.

The controller 80 controls the broadcasting processing apparatus as a whole and in particular controls generation and manipulation of an EPG menu. The controller 80 may include a micro controller unit (MCU) to store and execute an algorithm code.

If a reservation function is selected through the user input unit 70, the controller 80 controls the menu generator 60 to display on the display unit 30 a user interface to receive a user's setting input by a user. Here, the user's setting may include a function to be set and conditions about a broadcasting program. For example, if a user desires to execute a reservation viewing for a broadcasting program having a title of "Quiz Show", the user manipulates the user input unit 70 to input a reservation recording as a function to be set, and inputs "Quiz Show" as the condition about the broadcasting program.

The controller 80 stores in the storage unit 50 the user's setting input through the user input unit 70, and performs search to determine whether data corresponding to conditions about the broadcasting program exists in the EPG data stored in the storage unit 80. That is, if the EPG data corresponding to the conditions about the broadcasting program input by a user is stored in the storage unit 50, the controller 80 performs a set function. If the EPG data corresponding to the conditions about the broadcasting program input by a user is not currently stored in the storage unit 50, the controller 80 continues to periodically search the EPG data which is stored in the storage unit 50 and updated according to a predetermined period, and the controller 80 performs the set function when the corresponding EPG data is received and stored. Accordingly, the broadcasting processing apparatus according to an exemplary embodiment of the present invention may perform a search function or a reservation function for a future broadcasting program whose EPG data is not stored yet.

The function to be set may include a searching function as well as a reservation function such as a reservation viewing and a reservation recording. For example, if the searching function is set and a user wants to search a broadcasting program having a title of "Quiz Show", the controller 80 may control the menu generator 60 to display a message informing an EPG menu generated corresponding to the setting when the EPG data including the words "Quiz Show" is received and stored even though the currently stored data does not included.

The conditions about the broadcasting program may include a broadcasting time, a broadcasting station, a certain person's name, an object or a keyword as well as a program title. Furthermore, the conditions about the broadcasting program may utilize a search formula which combines a plurality of search words. For example, if a user desires to execute a reservation recoding for a special episode "Mr. Kim" among broadcasting programs including the title "Quiz Show", a user may input a search formula using operators such as "and", "or" and "except".

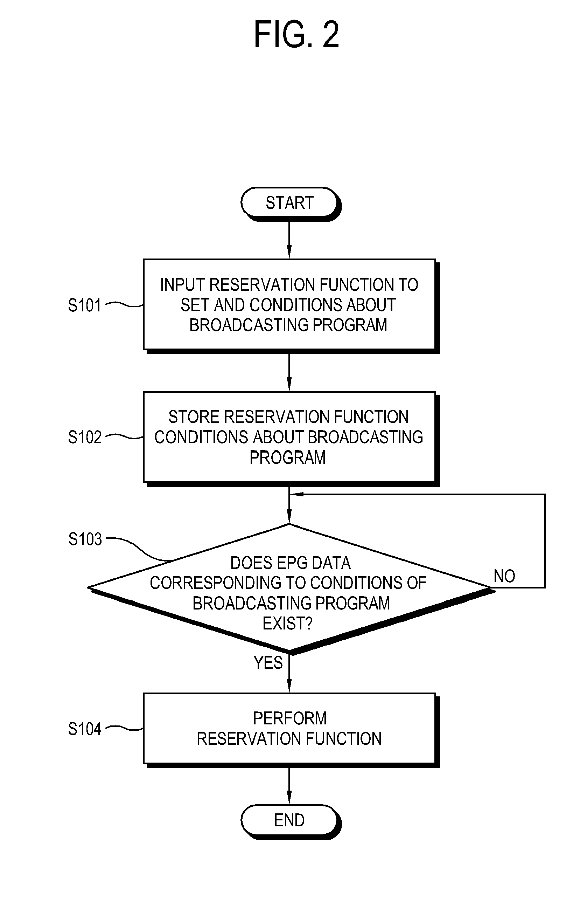

FIG. 2 is a flowchart of a method of searching a broadcasting program or setting a reservation function of the broadcasting program apparatus according to an exemplary embodiment of the present invention.

If the reservation function is selected through the user input unit 70, a user interface is displayed on the display unit 30 to receive a user's setting input by a user through the user input unit 70 (S101). Here, the user's setting may include the function to be set and conditions about the broadcasting program. The user's setting is input through the user input unit 70 by manipulating the user input unit 70 and stored in the storage unit 50 (S102). The controller 80 searches whether data corresponding to the conditions about the broadcasting program exists in the EPG data stored in the storage unit 50 (S103). If the data corresponding to the conditions about the broadcasting program does not exist in the EPG data stored in the storage unit 50, the controller 80 periodically repeats operation S103 to search EPG data which is updated according to a predetermined period.

The controller 80 repeats operation S103 periodically until either the controller 80 detects the data corresponding to the conditions about the broadcasting program in the EPG data stored in the storage unit 50, the controller 80 determines that at least one of the conditions about the broadcasting program set by the user can no longer be met, or the controller 80 determines that a predetermined period of time has lapsed. In addition, the controller 80 may determine to repeat operation 103 to search EPG data stored in the storage unit 50 each time the controller receives a new version EPG data and stores the new version EPG data in the storage unit 50. Thus, the controller 80 may repeat operation S103 only when the controller 80 detects that an update to EPG data is received and stored in the storage unit 50.

If the data corresponding to the conditions about the broadcasting program exists in the EPG data stored in the storage unit 50, the controller 80 performs the set function (S 104).

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A broadcasting processing apparatus comprising:
a signal processor which processes a broadcasting signal which is received, the broadcasting signal including electronic program guide (EPG) data; and
a controller which searches the EPG data to determine whether data corresponding to a broadcasting program is currently included in the EPG data, and performs a set reservation function with respect to the broadcasting program if it is determined that the data corresponding to the broadcasting program is currently included in the EPG data,
wherein if the controller determines that the data corresponding a broadcasting program is not currently included in the EPG data, the controller repeatedly searches the EPG data at periodic intervals to determine whether the data corresponding the broadcasting program is included in the EPG data which is updated.

2. The broadcasting processing apparatus according to claim 1, further comprising a storage unit which stores the EPG data,
wherein the controller searches the EPG data stored in the storage unit.

3. The broadcasting processing apparatus according to claim 2, wherein the controller performs the set reservation function with respect to the broadcasting program if it is determined that the data corresponding to the broadcasting program is currently included in the EPG data stored in the storage unit.

4. The broadcasting processing apparatus according to claim 1, wherein the controller displays a message about receiving the data corresponding to the broadcasting program if it is determined that the data corresponding to the broadcasting program is currently included in the EPG data.

5. The broadcasting processing apparatus according to claim 2, wherein if the controller determines that the data corresponding a broadcasting program is not included in the EPG data stored in the storage unit, the controller repeatedly searches the EPG data stored in the storage unit at the periodic intervals to determine whether the data corresponding the broadcasting program is included in the EPG data which is stored.

6. The broadcasting processing apparatus according to claim 1, further comprising a user input unit, wherein the data corresponding to the broadcasting program is input to set the reservation function.

7. The broadcasting processing apparatus according to claim 6, wherein the data corresponding to the broadcasting program comprises conditions about the broadcasting program to select the broadcasting program.

8. The broadcasting processing apparatus according to claim 7, wherein the conditions comprise a search formula including at least one search word.

9. The broadcasting processing apparatus according to claim 6, wherein the user input unit inputs conditions about a search period of the EPG data.

10. The broadcasting processing apparatus according to claim 1, wherein the reservation function comprises at least one of an EPG data display, a reservation viewing and a reservation recording for the broadcasting program.

11. A control method of a broadcasting processing apparatus, the control method comprising:
receiving a broadcasting signal which includes electronic program guide (EPG) data;
searching the EPG data to determine whether data corresponding a broadcasting program is currently included in the EPG data;
performing a set reservation function with respect to the broadcasting program, if it is determined that the data corresponding to the broadcasting program is currently included in the EPG data; and
repeatedly searching the EPG data at periodic intervals to determine whether the data corresponding the broadcasting program is included in the EPG data which is updated, if it is determined that the data corresponding the broadcasting program is not currently included in the EPG data.

12. The control method according to claim 11, further comprising further comprising storing the EPG data; wherein the searching the EPG data comprises searching the EPG data which is stored to determine whether the data corresponding the broadcasting program is included in the EPG data which is stored,
the performing the set reservation function comprises performing the set reservation, if it is determined that the data corresponding to the broadcasting program is included in the EPG data which is stored.

13. The control method according to claim 11, further comprising displaying a message about receiving the data corresponding to the broadcasting program if it is determined that the data corresponding a broadcasting program is currently included in the EPG data.

14. The control method according to claim 11, wherein the repeatedly searching the EPG data at the periodic intervals comprises repeatedly searching at the periodic intervals the EPG data which is stored to determine whether the data corresponding to the broadcasting program is included in the EPG data which is stored, if it is determined that the data corresponding to the broadcasting program is not included in the EPG data which is stored.

15. The control method according to claim 11, wherein the data corresponding to the broadcasting program comprises conditions about the broadcasting program,
the method further comprising receiving the conditions about the broadcasting program which are input to the broadcasting processing apparatus, and receiving conditions about a search period of the EPG data, wherein the conditions comprise a search formula which includes at least one search word.
